# EUROPEAN PATENT SPECIFICATION

(11) **EP 2 416 607 B1**
(45) Date of publication and mention of the grant of the patent: **30.08.2017**
(21) Application number: 10758068.0
(22) Date of filing: 02.04.2010
(51) Int. Cl.: H04W 36/34

(54) **BASE STATION CONTROLLER (BSC), MOBILE SWITCHING CENTER (MSC) AND METHOD FOR CONVERTING CALL MODE**
BASISSTATIONSSTEUERUNG, MOBILE VERMITTLUNGSPLATTFORM UND VERFAHREN FÜR UMSETZUNG EINES RUFMODUS
CONTRÔLEUR DE STATION DE BASE, CENTRE DE COMMUTATION MOBILE ET PROCÉDÉ S'APPLIQUANT À LA CONVERSION D'UN MODE D'APPEL

(30) Priority: 02.04.2009 CN 200910134213
(43) Date of publication of application: 08.02.2012
(73) Proprietor: ZTE Corporation, Shenzhen, Guangdong 518057 (CN)
(72) Inventor: MAO, Fei, Guangdong 518057 (CN); TANG, Xue, Guangdong 518057 (CN)
(74) Representative: Hoyle, Benjamin James
(86) International application number: PCT/CN2010/071527
(87) International publication number: WO 2010/111966

(56) References cited:
- WO-A1-2006/010333
- WO-A1-2006/126923
- CN-A- 1 728 875
- CN-A- 101 212 790

## Description

### Field of the Invention

The present invention relates to the communication field, and in particular to a base station controller, a mobile switching center, and a method for converting call mode.

### Background of the Invention

In the current global system for mobile communication (GSM for short), the Mobile Switching Center Server (MSC Server for short) and the Base Station Controller (BSC for short) communicate with each other via an interface A, and the Base Transceiver Station (BTS for short) is connected to the BSC via an interface Abis, and the Mobile Station (MS for short) communicates with the BTS via an air interface (Um interface).

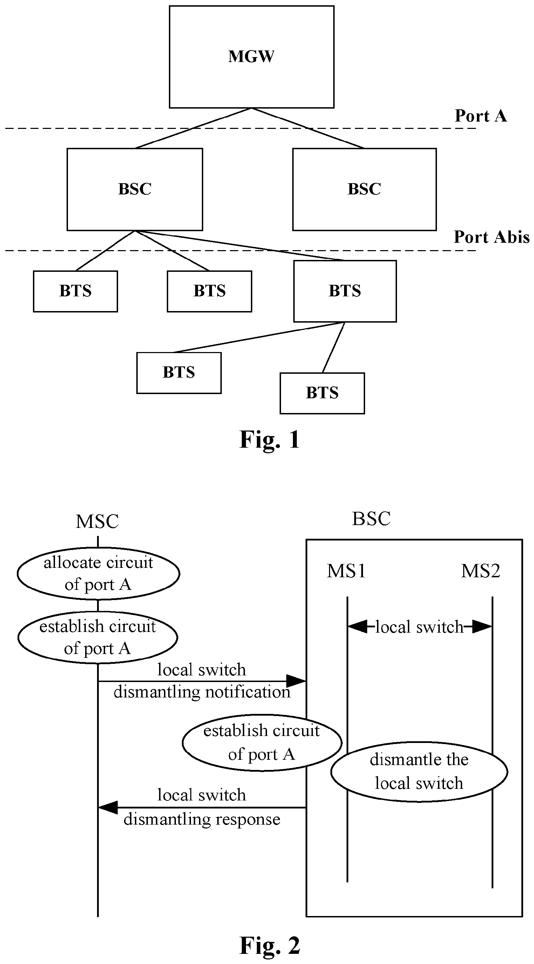

During a call procedure of the GSM, the user plane voice of one calling party is transferred to the Media Gateway (MGW for short) by the BSC and then transferred to the BSC of the opposite calling party (end) by the MGW. Fig. 1 is a schematic block diagram of the structure between MGW, BSC and BTS in relevant art, and as shown in Fig. 1, the MGW can communicate with a plurality of BSCs subordinate to the MGW, and the BSC can communicate with a plurality of BTSs subordinate to the BSC, wherein the MGW and BSC communicate with each other via an port A.

In the real GSM network, there are a large amount of local calls, i.e., both parties of the call belong to the same BSC, and in particular, both parties of the call can belong to the same BTS or belong to different BTSs of the same BTS cluster (including a plurality of BTSs cascaded with each other). As to these local calls, since the BSCs of both parties of the call are same, the user plane voice data of both parties of the call can directly interact via the BSC without MGW. However, during the existing local call, both parties of the call still need to transmit the user plane voice to the opposite party via the MGW, which will cause unnecessary waste of interface transmission resources.

As to the above waste of interface transmission resources, in relevant art, a Local Switch (abbreviated as LS) mode is used. The local switch mode can enable the local call to finish the switch of the user plane voice without MGW.

However, during practical operation, not all the local calls can use the local switch mode. For example, when the BSC is performing a handover operation (including intra-BSC handover and inter-BSC handover in certain situations), if the call still continues to use the local switch mode, it would cause the call failed. In this case, the certain situations can be that a subscriber subordinate to the BSC newly applies for a value-added service which is not suitable for the local switch and also can be that a voice version of calling party/called party before the intra-BSC handover is inconsistent with those after the intra-BSC handover. However, currently still no effective solution is proposed regarding the problem in relevant art that the call is failed due to using the local switch mode in the case of the local switch mode being not suitable.

WO 2006/010333 A1 describes a method of sending a mobile network code (MNC) to terminals in a communication system. This method comprises arranging multi MNCs in term of cells in a base station controller, and arranging at least one cell per MNC. The system message sent by the base station in the cell to the terminals carries the cell's corresponding MNC , and is sent to the terminals in this cell.

### Summary of the Invention

The present invention is proposed regarding the problem in relevant art that the call is failed due to using local switch to perform local call in the call which the local switch mode is not suitable for. For this end, the present invention is intended to provide a solution for converting the call mode so as to solve the above problem.

In order to achieve the above object, a method for converting call mode is provided according to one aspect of the present invention.

The method for converting call mode according to the present invention comprises: establishing, by a mobile switching center, circuits of port A for both parties of a call of a local switch and sending a conversion notification message; and establishing, by a base station controller, circuits of port A for both parties of a call of the local switch according to the conversion notification message received by the base station controller from the mobile switching center..

Furthermore, before the mobile switching center sends the conversion notification message, said method further comprises: pre-allocating, by the mobile switching center, the circuits of port A for the both parties of the call, the conversion notification message carrying the information of the circuits of port A, and the base station controller establishing the circuits of port A according to the information..

Furthermore, before the mobile switching center sends the conversion notification message, said method further comprises: sending, by the base station controller, a conversion request message to the mobile switching center, wherein the conversion request message is configured to request to dismantle a connection of the local switch.

Furthermore, before said mobile switching center pre-allocating said Circuits of port A to said calling parties and sending the conversion notification message, the above method further comprises: sending, by the base station controller, a conversion request message to the mobile switching center, wherein the conversion request message is configured to request to dismantle a connection of the local switch.

Furthermore, the step of sending by the base station controller the conversion request message to the mobile switching center includes: sending by the base station controller the conversion request message to the mobile switching center, wherein the conversion request message carries the information of the circuits of port A allocated to the both parties of the call by the base station controller.

Furthermore, after the base station controller establishes the circuits of port A for the both parties of the call of the local switch, said method further comprises: dismantling, by the base station controller, a user plane link of the local switch..

Furthermore, the information of the circuits of port A carried in the conversion notification message includes: identifiers of a first calling party and a second calling party in the both parties of the call, information of an circuit of port A allocated to the first calling party, and information of an circuit of port A allocated to the second calling party; or information of an circuit of port A allocated to one calling party, and information of an circuit of port A allocated to another calling party.

In order to achieve the above objects, a base station controller is provided according to another aspect of the present invention.

The base station controller according to the present invention comprises: a receiving module, configure to receive a conversion notification message sent by a mobile switching center, wherein said conversion notification message is configured to indicate the base station controller to establish circuits of port A of both parties of a call of a local switch; an establishing module, configured to establish the circuits of port A for the both parties of the call of the local switch according to the conversion notification message received by the receiving module; and a dismantling module, configured to dismantle a user plane link of the local switch after the establishing module establishes the circuits of port A for the both parties of the call of the local switch.

Furthermore, this base station controller further comprises: a requesting module, configured to send a conversion request message to the mobile switching center, wherein the conversion request message is configured to request to dismantle a connection of the local switch.

Furthermore, the base station controller further comprises: an allocating module, configured to allocate the circuits of port A for the both parties of the call of the local switch, wherein the information of the circuits of port A is carried in the conversion request message sent by the requesting module.

In order to achieve the above objects, a mobile switching center is provided according to another aspect of the present invention.

The mobile switching center according to the present invention comprises: an allocating module, configured to allocate circuits of port A for both parties of a call of a local switch; and a sending module, configured to send a conversion notification message to a base station controller, wherein the conversion notification message carries the information of the circuits of port A.

Furthermore, the mobile switching center further comprises: a receiving module, configured to receive a conversion request message sent by the base station controller, wherein the conversion request message is configured to request to dismantle a connection of the local switch.

Furthermore, the receiving module is further configured to receive a conversion completion message sent by the base station controller after a user plane link of the local switch is dismantled

By virtue of at least one of the above technical solutions, circuits of port A are established for both parties of the call respectively by a base station controller according to a conversion notification message sent by a mobile switching center, which overcomes the above problem in relevant art that the call is failed due to using the local switch to perform local call in the call which the local switch is not suitable for, in which the call can be converted into non-local switch mode by converting the call mode, to achieve the local call which the local switch is not suitable for.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic block diagram of the structure between MGW, BSC and BTS;
Fig. 2 is a flow chart of a method for converting the call mode in which the conversion operation is actively initiated by the MSC according to the embodiments of the present invention;
Fig. 3 is a flow chart of a method for converting the call mode in which the conversion operation is actively initiated by the BSC according to the embodiments of the present invention;
Fig. 4 is a schematic diagram of the procedure of inter-BSC handover in relevant art;
Fig. 5 is a schematic diagram of the conversion of call mode during inter-BSC handover according to the embodiments of the present invention;
Fig. 6 is a schematic diagram of the procedure of intra-BSC handover which does not achieve AoverIP in relevant art;
Fig. 7 is a schematic diagram of the conversion of call mode during intra-BSC handover which does not achieve AoverIP according to the embodiments of the present invention;
Fig. 8 is a schematic diagram of the procedure of intra-BSC handover which achieves AoverIP in relevant art;
Fig. 9 is a schematic diagram of the conversion of call mode during intra-BSC handover which achieves AoverIP according to the embodiments of the present invention;
Fig. 10 is another schematic diagram of the conversion of call mode during intra-BSC handover which achieves AoverIP according to the embodiments of the present invention;
Fig. 11 is a block diagram of a BSC according to the embodiments of the present invention; and
Fig. 12 is a block diagram of a MSC according to the embodiments of the present invention.

### Detailed Description of the Embodiments

In relevant art, the local call is performed using the local switch to avoid the waste of interface transmission resources. However, if the local switch mode is still used in the situation that the local switch mode is not suitable, it would cause call failed. At this moment, it needs to convert the call mode of the local call from the local switch to the non-local switch. Based on this, the embodiments of the present invention provide a solution for converting call mode, that is, establishing circuits of port A for both parties of a local call respectively by a base station controller according to a conversion notification message sent by a mobile switching center, and then dismantling (removing) a user plane link of the local switch. Thus, both parties of the local call can use non-local switch to achieve the local call so as to perform communication normally.

The present invention will be described hereinafter in detail with reference to the drawings and in conjunction with the embodiments. It needs to be noted that the embodiments of the present application and the features in the embodiments can be combined with each other if there is no conflict. In the following description, it is assumed that a local switch has already been established on the BSC, and the MSC and BSC know which calls have already established the local switch and which calls the local switch is not suitable for. Thus, the MSC and BSC both can initiate a call mode conversion actively to convert those calls which the local switch mode is not suitable for into the calls of non-local switch mode.

### Method Embodiments

A method for converting call mode is provided according to the embodiments of the present invention, wherein the call modes include the local switch and the non-local switch, and a local switch is established on the BSC or BTS.

The above method for converting call mode comprises: establishing, by a mobile switching center, circuit(s) of port A for both parties of a call of a local switch and sending a conversion notification message; establishing, by a BSC, circuit(s) of port A for both parties of a call of a local switch according to the received conversion notification message thereof from the mobile switching center, wherein the conversion notification message is used for indicating the BSC to establish the circuit of port A.

As described above, during the conversion of the call mode, both the MSC and the BSC need to establish circuit(s) of port A for both parties of a call, wherein the BSC establishes the circuit(s) of port A for both parties of the call according to the conversion notification message received, to enable the both parties of the call which the local switch is not suitable for to perform communication by using the non-local switch, which overcomes the problem in relevant art that the call is failed due to using the local switch to perform the local call in the local call which the local switch is not suitable for, and enables the both parties of the call to communicate with each other normally.

In particular, this conversion procedure will be described in detail by taking the MSC and BSC initiating the conversion operation actively for example respectively.

### (I) the MSC initiates the conversion operation actively

The MSC sends a conversion notification message to the BSC and carries in the conversion notification message the information of the circuits of port A which are allocated to the both parties of the call by the MSC. Thus, the BSC can establish the circuits of port A for the both parties of the call respectively according to the information of the circuits of port A allocated to the both parties of the call by the MSC to achieve the local call of the non-local switch.

Fig. 2 is a flow chart of a method for converting the call mode in which the conversion operation is initiated by the MSC actively according to the embodiments of the present invention, and as shown in Fig. 2, during the call after the establishment of local switch, the MSC initiates the conversion operation actively, and the procedure of this method for converting call mode includes:
first, the MSC allocates respectively the circuits of port A for the both parties of the call which performs conversion operation and establishes the circuits of port A for the both parties of the call; and
then, the MSC sends a conversion notification message to the BSC, i.e. the local switch dismantling notification message in Fig. 2, wherein the message carries the information of the circuits of port A newly allocated to the both parties of the call respectively. Herein, the order of the operations of the MSC sending the conversion notification message and establishing the circuits of port A for the both parties of the call can be determined according to the procedure during practical operation, and the present invention is not limited to this.

Thus, after receiving the local switch dismantling notification message, the BSC can establish the circuits of port A for the both parties of the call respectively according to the information of the circuits of port A carried in the message, i.e. establishing the connection from both parties of the call to the port A respectively.

After the establishment of the circuits of port A is finished, the BSC dismantles a user plane link of the local switch and returns a conversion completion message to the MSC, i.e. the local switch dismantling reply message in Fig. 2.

During the particular implementation, there can be the following two forms of the local switch dismantling notification message sent by the MSC:
(1) at least including four fields shown in Table 1: call reference number 1, call reference number 2, Circuit of port A 1, and Circuit of port A 2, wherein the Circuit of port A 1 is allocated to a calling party which is represented by the call reference 1, and the Circuit of port A 2 is allocated to a calling party which is represented by the call reference number 2. In this case, the call reference number is allocated to each call when establishing the local switch, and thus, it can be definitely differentiated which party of the call the information of the circuit of a port A is allocated to.

**Table 1**

| Serial Number | Field Content | Remark |
|---|---|---|
| 1 | Call Reference ID 1 | call reference number 1 |
| 2 | A Circuit Identity Code | Circuit 1 of port A |
| 3 | Call Reference ID 2 | call reference number 2 |
| 4 | A Circuit Identity Code | Circuit 2 of port A |

(2) at least including two fields shown in Fig. 2: Circuit of port A of present party and Circuit of port A of opposite party. In this case, the Circuit of port A of present party represents the Circuit of port A allocated to one party of the call corresponding to a link which transmits the local switch dismantling notification message, and the Circuit of port A of opposite party represents the Circuit of port A allocated to another party of the call.

**Table 2**

| Serial Number | Field Content | Remark |
|---|---|---|
| 1 | Self A Circuit Identity Code | Circuit of port A of present party |
| 2 | Other Side A Circuit Identity Code | Circuit of port A of opposite party |

It needs to be noted that the information of the Circuits of port A in this embodiment is represented in TDM format, and during the practical operation, it can also use IP format and other formats to represent the information of the Circuits of port A.

In this embodiment, the MSC initiates the conversion operation actively, informs the base station controller to dismantle (remove) the connection of the local switch in the base station controller and re-establish a new Circuit of port A, and thus the local switch is converted into the non-local switch, which avoids that the call is failed due to the local switch mode when the BSC performs the handover, and improves system performance.

### (II) the BSC initiates the conversion operation actively

The base station controller sends a conversion request message to the mobile switching center, wherein the conversion request message is used for requesting to initiate a conversion of the call mode; and in response to the conversion request message, the mobile switching center sends a conversion notification message to the base station controller.

In particular, if the base station controller supports the allocation of Circuits of port A, then the base station controller can allocate the Circuits of port A for both parties of the call. At this moment, the conversion request message sent to the MSC includes the information of the Circuits of port A which are allocated by the base station controller for the both parties of the call. At this moment, after having received the conversion request message, the mobile switching center does not need to allocate the Circuits of port A for the both parties of the call, and the mobile switching center establishes the Circuits of port A for the both parties of the call according to the conversion request message. Then, the MSC sends a conversion notification message to the BSC, wherein the conversion notification message can carry the information of the Circuits of port A in the conversion request message, or not carry this information. After the BSC has received the conversion notification message, the BSC can establish the Circuits of port A for both parties of the call to achieve the local call of the non-local switch.

Of course, if the base station controller does not support the allocation of Circuits of port A, then the conversion request message sent to the MSC is only used for requesting to initiate the conversion of the call mode, at this moment, the MSC allocates the Circuits of port A for both parties of the call, and the sequential procedure is the same as the procedure in the above (I), which will not be described here redundantly.

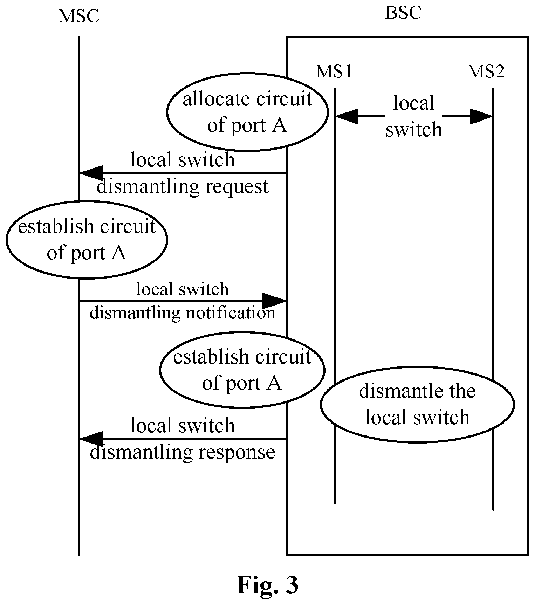

Fig. 3 is a flow chart of a method for converting the call mode in which the conversion operation is initiated by the BSC actively according to the embodiments of the present invention. As shown in Fig. 3, during the call after the establishment of the local switch, the BSC initiates the conversion operation actively wherein the BSC supports the allocation of the Circuits of port A, and the procedure of this method for converting call mode includes:
first, the BSC sends a conversion request message to the MSC, i.e. the local switch dismantling request message in Fig. 3. Since the BSC supports the allocation of the Circuits of port A, the BSC allocates the Circuits of port A for both parties of the call, carries the information of the Circuits of port A in the local switch dismantling request message, and sends the message to the MSC. If the BSC does not support the allocation of the Circuits of port A, the BSC is unable to allocate the Circuits of port A for both parties of the call. At this moment, the local switch dismantling request message sent is only used for requesting to initiate the conversion operation of the call mode.

After having received the local switch dismantling request message, the MSC judge whether it needs to allocate the Circuits of port A for this conversion operation. If the local switch dismantling request message carries the information of the Circuits of port A, then the MSC does not need to perform the allocation again and only needs to confirm the information of the Circuits of port A; and if the local switch dismantling request message does not carry the information of the Circuits of port A, i.e. the BSC does not allocate the information of Circuits of port A, then the MSC needs to allocate the Circuits of port A for both parties of the call respectively.

The MSC establishes the connection of the Circuits of port A for both parties of the call respectively according to the allocated Circuits of port A and sends a conversion notification message (i.e. the local switch dismantling notification message in the figure) to the BSC. If the BSC does not allocate the Circuits of port A, then the local switch dismantling notification message carries the information of the Circuits of port A allocated. If the BSC allocates the Circuit of port A, then the information of the Circuits of port A allocated can be carried or not carried in the local switch dismantling notification message.

After having received the local switch dismantling notification message, the BSC establishes the connection to the port A for both parties of the call respectively. After the establishment is finished, the BSC dismantles the user plane link of the local switch and returns a local switch dismantling response message to the MSC.

Herein, the information of the Circuits of port A can be in the two forms described above, which will not be described here redundantly.

In this embodiment, the BSC initiates the conversion operation actively and informs the MSC to send a conversion notification message; after the BSC has received this conversion notification message, the BSC establishes the Circuits of port A for both parties of the call of the local switch according to the information of the Circuits of port A carried in the conversion notification message, and thus the local switch is converted into the non-local switch, which avoids that the call is failed due to the local switch mode when the BSC performs the handover, and improves the performance and stability of the system.

The embodiments of the present invention will herein be described in detail by taking the call mode conversions caused by the inter-BSC handover and intra-BSC handover as the examples respectively.

### (I) the call mode conversion caused by the inter-BSC handover

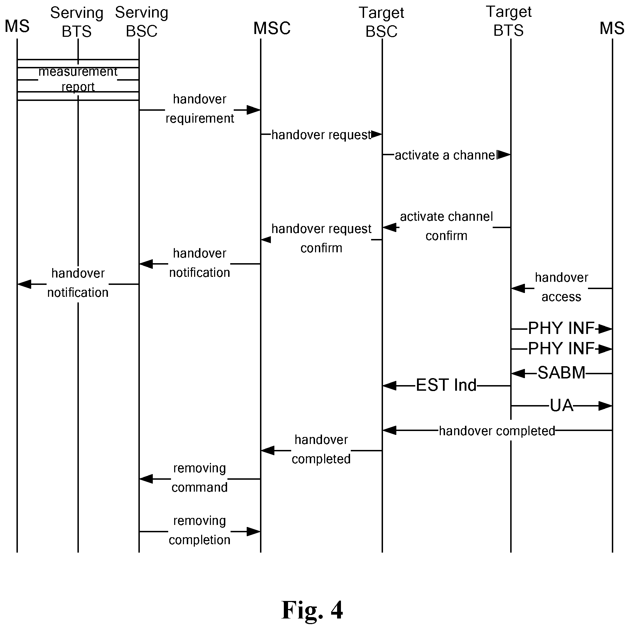

Fig. 4 is a schematic diagram of the procedure of inter-BSC handover in relevant art.

When there is no local switch during the call, as shown in Fig. 4, after having received a measurement report of an MS, the BSC finds that it needs to perform an inter-BSC handover, then the BSC sends a handover requirement (Handover Required) to the MSC. The MSC judges that this handover is an inter-BSC handover, then it sends a handover request (Handover Request) message to a target BSC (or called as new BSC) of the handover subscriber and carries in the handover request message the information of the Circuits of port A allocated for the handover subscriber. The target BSC (or called as new BSC) activates a channel (Channel Active) on the target BTS (or called as new BTS) for the handover subscriber and waits for the handover subscriber to access. After the access and handover of the subscriber are finished, the handover subscriber sends a handover completed message (Handover Complete), and the handover subscriber starts to use the newly allocated Circuits of port A to perform switching (or exchanging) of the user plane data.

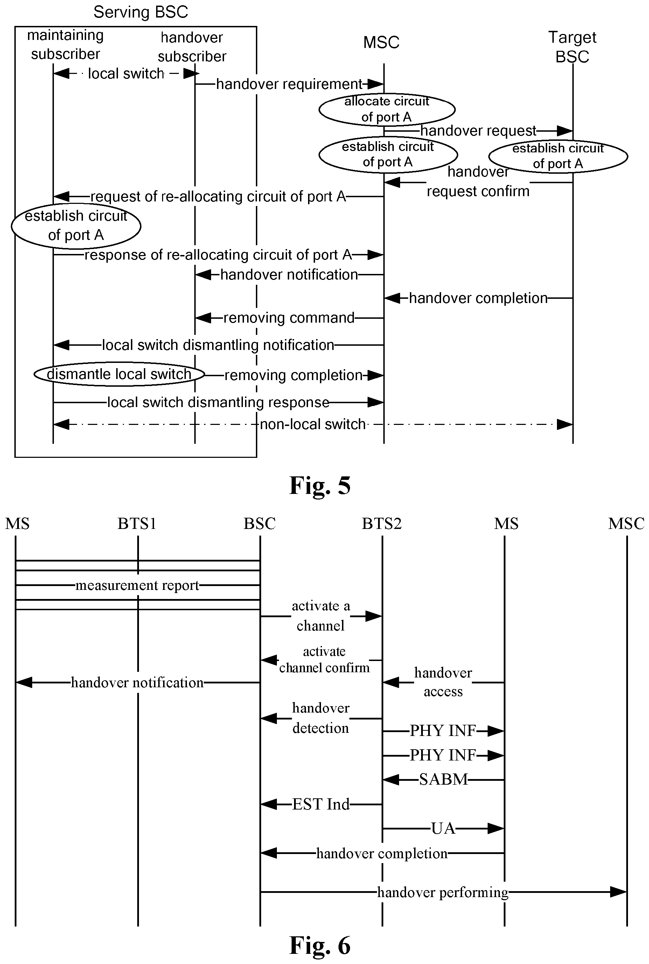

In the situation that there is the local switch during the call, the inter-BSC handover will cause the local switch to be not suitable. Fig. 5 is a schematic diagram of the conversion of the call mode during inter-BSC handover according to the embodiments of the present invention. As shown in Fig. 5, after having received the handover requirement message (Handover Required), the MSC judges that this handover will cause the local switch unable to continue, and thus it needs to perform the conversion operation of the call mode. At this moment, the MSC initiates the conversion operation of the call mode actively.

The procedure of handover subscriber during the conversion of the call mode is implemented same as that in relevant protocol and remains the same, which will not be described here redundantly.

As described above, the subscriber after handover will use the allocated Circuit of port A, but if the subscriber who does not perform handover (non-handover subscriber) wants to still maintain (or hold) the calling after the local switch, then it has to obtain the newly allocated circuit(s). After the inter-BSC handover is completed (Handover Complete), the MSC initiates the conversion operation of the call mode and sends a local switch dismantling request message to the BSC where the non-handover subscriber (i.e. the maintaining subscriber in the figure) is located; and after the local switch link of the non-handover subscriber is dismantled, the non-handover subscriber uses the re-established connection of Circuit of port A to switch the user plane data, which ensures the communication quality of handover subscriber and non-handover subscriber and improves user experience.

### (I) the call mode conversion caused by the intra-BSC handover

Fig. 6 is a schematic diagram of the procedure of intra-BSC handover which does not achieve AoverIP (i.e. AoIP, the Circuit of port A is achieved by the IP mode) in relevant art.

As shown in Fig. 6, in the situation that there is no local switch, the BSC controls the whole handover procedure. After the BSC has received a measurement report, the BSC initiates a handover; and after the handover subscriber sends a handover completed message (Handover Complete) to the BSC after the handover is completed, the BSC sends a handover performing (Handover Performed) message to the MSC for the notification.

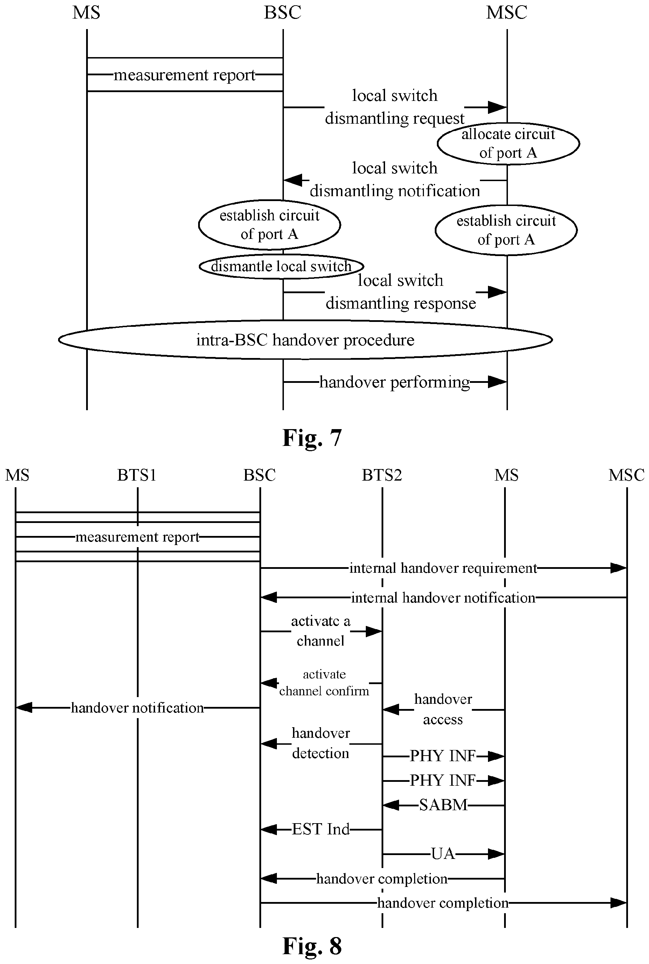

In the situation that the call achieves the local switch, when the BSC finds that it needs to perform an intra-BSC handover according to the measurement report, the BSC should consider whether the local switch can be maintained after the handover. If the BSC finds that the local switch cannot be maintained after the handover, it needs to actively initiate the conversion operation of the local call mode shown in Fig. 7. As shown in Fig. 7, the particular conversion operation of the local call mode is the same as the above conversion operation initiated by the BSC actively (wherein the BSC does not support the allocation of the A port), which will not be described herein redundantly. Thus, before the BSC handover is completed, the call has already been converted from the local switch to the non-local switch.

Fig. 8 is a schematic diagram of the procedure of the intra-BSC handover which achieves AoverIP in relevant art. As shown in Fig. 8, in the situation that there is no local switch, after having received the measurement report, the BSC judges that it needs to perform an intra-BSC handover, then the BSC sends an internal handover requirement message (Internal Handover Required) to the MSC, and the MSC returns an internal handover notification message (Internal Handover Command), the BSC starts to activate a channel (Channel Active) and waits for the access of the handover subscriber. After the access and handover of the subscriber are completed, the handover subscriber sends a handover completion message (Handover Complete), and the BSC informs the MSC that the handover is completed. The whole handover procedure needs to be completed via the message interaction between the BSC and the MSC.

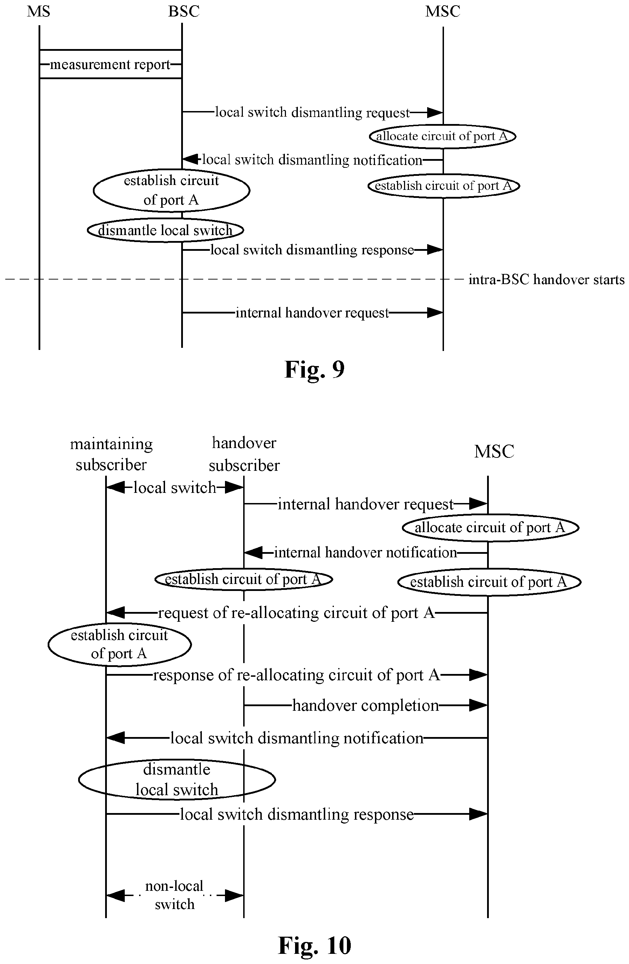

In the situation that there is the local switch, when the intra-BSC handover occurs, the BSC should judge whether the local switch can be maintained after the internal handover is completed. If the local switch cannot be maintained, it needs to actively initiate the conversion operation of the local call mode shown in Fig. 9. As shown in Fig. 9, the BSC can initiate the conversion operation of the call mode before the start of handover, and particularly the conversion operation of the local call mode is the same as the above conversion operation initiated by the BSC actively, which will not be described herein redundantly. At this moment, it is not necessary to modify the intra-BSC handover procedure, and the local switch has been converted to the non-local switch before the internal handover is completed.

During particular implementation, it can also be selected to make certain modification to the intra-BSC handover procedure to achieve the conversion from the local switch to the non-local switch. Fig. 10 is a schematic diagram of the conversion operation of the local call mode during an intra-BSC handover which achieves AoverIP according to the embodiments of the present invention. As shown in Fig. 10, after having received the measurement report, the BSC finds that it is unable to maintain the local switch after the internal handover, and the BSC carries a local switch dismantling request in an internal handover requirement message (Internal Handover Required). After having received this local switch dismantling request, the MSC allocates a Circuit of port A for the handover party in an internal handover notification message (Internal Handover Command), and at the same time uses a resources re-allocation message of port A to re-allocate user plane resources for non-handover party. After having received the handover completion message (Handover Complete), the MSC sends a local switch dismantling request notification. After the local switch is dismantled, both parties of the call perform switching of the user plane data by newly allocated Circuit(s) of port A, which ensures the communication quality of both party subscribers of the call of local switch and improves user experience.

### Apparatus Embodiment I

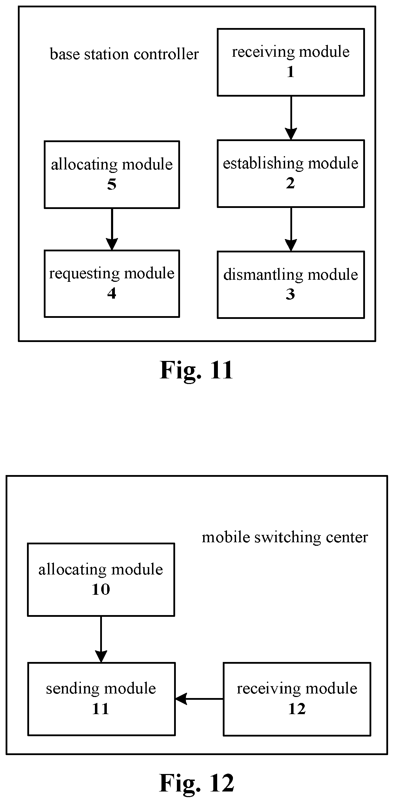

A base station controller (BSC) is provided according to the embodiments of the present invention, and preferably it is used for achieving the above method embodiments and the function of the base station controller related in the following apparatus embodiment II. Fig. 11 is a block diagram of this BSC, and as shown in Fig. 11, this BSC comprises: a receiving module 1, an establishing module 2, and a dismantling module 3, wherein
the receiving module 1 is used for receiving a conversion notification message sent by a mobile switching center, wherein the conversion notification message is used for indicating the base station controller to establish Circuits of port A for both parties of the call of a local switch; the establishing module 2, connected to the receiving module 1, is used for establishing the Circuits of port A for both parties of the call of the local switch according to the conversion notification message received by the receiving module 1; and the dismantling module 3, connected to the establishing module 2, is used for dismantling a user plane link of the local switch after the establishing module 2 establishes the Circuits of port A for both parties of the call of the local switch.

In this embodiment, Circuits of port A are established for both parties of the call of the local switch on the base station controller, which overcomes the problem in relevant art that the local call is failed due to using the local switch to perform the local call in the local call which the local switch is not suitable for with the intention of avoiding waste of interface transmission resources, and improves system performance and user experience.

Preferably, when the BSC initiates the conversion operation of call mode actively, the requesting module 4 is further used for sending a conversion request message to the mobile switching center, wherein the conversion request message is used for requesting to dismantle the connection of the local switch.

As described above, the establishing module 2 establishes Circuits of port A for both parties of the call according to the conversion notification message which is received by the receiving module 1 and indicates the base station controller to establish the Circuits of port A. As compared to relevant art, the embodiments of the present invention enable the local call to use the non-local switch so to achieve the local call wherein the local switch is not suitable for the local call.

Preferably, above BSC further comprises: an allocating module 5, which can be connected to the requesting module 4 and is used for allocating Circuits of port A for both parties of the call of the local switch, wherein the information of Circuits of port A is carried in the conversion request message sent by the requesting module 4. Thus, when the BSC supports the allocation of the port A and initiates the conversion operation of call mode actively, the allocating module 5 can allocate Circuits of port A for both parties of the call. The implementation of this preferred embodiment is simple and is easy to be operated.

Particularly, the operation of each module can be learned by referring to the description in the above method embodiments, which will not be described herein redundantly.

### Apparatus Embodiment II

A mobile switching center (MSC) is provided according to the embodiments of the present invention, and preferably it is used for achieving the above method embodiments and the function of the mobile switching center related in apparatus embodiment I. Fig. 12 is a block diagram of this MSC, and as shown in Fig. 12, this MSC comprises: an allocating module 10 and a sending module 11, wherein
the allocating module 10 is used for allocating Circuits of port A for both parties of the call of local switch; the sending module 11, connected to the allocating module 10, is used for sending a conversion notification message to the base station controller when it is judged that a call mode conversion needs to be performed, wherein the conversion notification message carries the information of Circuits of port A.

In this embodiment, Circuits of port A are established for the both parties of a call of the local switch on the base station controller, which overcomes the problem in relevant art that the local call is failed due to using the local switch to perform the local call in the local call which the local switch is not suitable for with the intention of avoiding waste of interface transmission resources, and improves system performance and user experience.

Preferably, a receiving module 12, connected to the sending module 11, is used for receiving a conversion request message sent by the base station controller, wherein the conversion request message is used for requesting to dismantle the connection of the local switch. In addition, the receiving module 12 can be further used for receiving a conversion completion message which is sent by the base station controller after the user plane link of the local switch is dismantled.

In the situation that the BSC initiates the conversion of call mode actively and the BSC supports the allocation of Circuits of port A for both parties of the call of the local switch, the conversion request message carries the information of the Circuits of port A allocated, and this allocating module 10 directly sends a conversion notification message to the base station controller according to the conversion request message received by the receiving module 12.

Furthermore, during particular implementation, in this preferred embodiment, the MSC allocates Circuits of port A for the both parties of the call of local switch in the situation that the MSC initiates the conversion of call mode actively, or the BSC initiates the conversion of call mode actively and the BSC does not support the allocation of Circuits of port A for the both parties of the call of the local switch.

Particularly, the operation of each module can be learned by referring to the description in the above method embodiments, which will not be described here redundantly.

It can be seen from the above description that the sending module 1 sends to the BSC a conversion notification message used for indicating the establishment of Circuits of port A, so as to enable the BSC to establish Circuits of port A for both parties of the call. Thus, both parties of the call can use the non-local switch mode to achieve the local call, which overcomes the problem in relevant art that the call is failed due to using the local switch to perform the local call in the local call which the local switch for is not suitable for with the intention of avoiding waste of interface transmission resources, and improves user experience of the calling parties of local switch.

In summary, by virtue of the embodiments of the present invention, the MSC or BSC allocates and establishes the Circuits of port A for both parties of the call, which enables the both parties of the call to use non-local switch mode to achieve the local call wherein the local switch is not suitable for the call, which overcomes the problem in relevant art that the call is failed due to using the local switch to perform the local call in the local call which the local switch is not suitable for with the intention of avoiding waste of interface transmission resources, and improves the performance and stability of the system. In addition, the embodiment of the present invention provides an effective technical solution for the conversion operation of call mode.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art.

## Claims

1. A method for converting call mode, **characterized in that** said method comprises:
establishing, by a mobile switching center, circuits of port A for both parties of a call of a local switch and sending a conversion notification message; and
establishing, by a base station controller, circuits of port A for both parties of a call of the local switch according to the conversion notification message received by the base station controller from the mobile switching center.

2. The method according to claim 1, **characterized in that** before the mobile switching center sends the conversion notification message, said method further comprises:
pre-allocating, by the mobile switching center, the circuits of port A for the both parties of the call, the conversion notification message carrying the information of the circuits of port A, and the base station controller establishing the circuits of port A according to the information.

3. The method according to claim 2, **characterized in that** before the mobile switching center sends the conversion notification message, said method further comprises:
sending, by the base station controller, a conversion request message to the mobile switching center, wherein the conversion request message is configured to request to dismantle a connection of the local switch.

4. The method according to claim 1, **characterized in that** before the mobile switching center sends the conversion notification message, said method further comprises:
sending, by the base station controller, a conversion request message to the mobile switching center, wherein the conversion request message is configured to request to dismantle a connection of the local switch.

5. The method according to claim 4, **characterized in that** the step of sending by the base station controller the conversion request message to the mobile switching center includes: sending by the base station controller the conversion request message to the mobile switching center, wherein the conversion request message carries the information of the circuits of port A allocated to the both parties of the call by the base station controller.

6. The method according to any one of claims 1 to 5, **characterized in that** after the base station controller establishes the circuits of port A for the both parties of the call of the local switch, said method further comprises:
dismantling, by the base station controller, a user plane link of the local switch.

7. The method according to any one of claims 2 to 5, **characterized in that** the information of the circuits of port A carried in the conversion notification message includes:
identifiers of a first calling party and a second calling party in the both parties of the call, information of an circuit of port A allocated to the first calling party, and information of an circuit of port A allocated to the second calling party; or
information of an circuit of port A allocated to one calling party, and information of an circuit of port A allocated to another calling party.

8. A base station controller, **characterized in that** said base station controller comprises:
a receiving module, configure to receive a conversion notification message sent by a mobile switching center, wherein said conversion notification message is configured to indicate the base station controller to establish circuits of port A of both parties of a call of a local switch;
an establishing module, configured to establish the circuits of port A for the both parties of the call of the local switch according to the conversion notification message received by the receiving module; and
a dismantling module, configured to dismantle a user plane link of the local switch after the establishing module establishes the circuits of port A for the both parties of the call of the local switch.

9. The base station controller according to claim 8, **characterized in that** the base station controller further comprises:
a requesting module, configured to send a conversion request message to the mobile switching center, wherein the conversion request message is configured to request to dismantle a connection of the local switch.

10. The base station controller according to claim 9, **characterized in that** the base station controller further comprises:
an allocating module, configured to allocate the circuits of port A for the both parties of the call of the local switch, wherein the information of the circuits of port A is carried in the conversion request message sent by the requesting module.

11. A mobile switching center, **characterized in that** the mobile switching center comprises:
an allocating module, configured to allocate circuits of port A for both parties of a call of a local switch; and
a sending module, configured to send a conversion notification message to a base station controller, wherein the conversion notification message carries the information of the circuits of port A.

12. The mobile switching center according to claim 11, **characterized in that** the mobile switching center further comprises:
a receiving module, configured to receive a conversion request message sent by the base station controller, wherein the conversion request message is configured to request to dismantle a connection of the local switch.

13. The mobile switching center according to claim 12, **characterized in that** the receiving module is further configured to receive a conversion completion message sent by the base station controller after a user plane link of the local switch is dismantled.

## Patentansprüche

1. Ein Verfahren zur Konvertierung des Anrufmodus, **dadurch gekennzeichnet, dass** das Verfahren umfasst:
das Einrichten, durch eine Mobilfunknetzvermittlungsstelle, von Kanälen der Schnittstelle A für beide Anrufteilnehmer einer Lokalvermittlung und das Senden einer Konvertierungsbenachrichtigung; und
das Einrichten, durch eine Basisstations-Steuereinrichtung, von Kanälen der Schnittstelle A für beide Anrufteilnehmer der Lokalvermittlung gemäß der Konvertierungsbenachrichtigung, die von der Mobilfunknetzvermittlungsstelle gesendet und von der Basisstations-Steuereinrichtung empfangen wird.

2. Das Verfahren nach Anspruch 1, **dadurch gekennzeichnet, dass** vor dem Senden der Konvertierungsbenachrichtigung durch die Mobilfunknetzvermittlungsstelle das Verfahren zusätzlich umfasst:
das Vorzuteilen, durch eine Mobilfunknetzvermittlungsstelle, der Kanäle der Schnittstelle A für beide Anrufteilnehmer, die Konvertierungsbenachrichtigung, welche die Informationen zu den Kanälen der Schnittstelle A enthält, und die Basisstations-Steuereinrichtung, wobei die Basisstations-Steuereinrichtung die Kanäle der Schnittstelle A gemäß der Informationen einrichtet.

3. Das Verfahren nach Anspruch 2, **dadurch gekennzeichnet, dass** das Verfahren, vor dem Senden der Konvertierungsbenachrichtigung durch die Mobilfunknetzvermittlungsstelle, zusätzlich umfasst:
das Senden einer Konvertierungsanforderungsnachricht durch die Basisstations-Steuereinrichtung an die Mobilfunknetzvermittlungsstelle, wobei die Konvertierungsanforderungsnachricht dazu eingerichtet ist, den Abbau einer Verbindung der Lokalvermittlung anzufordern.

4. Das Verfahren nach Anspruch 1, **dadurch gekennzeichnet, dass** das Verfahren, vor dem Senden der Konvertierungsbenachrichtigung durch die Mobilfunknetzvermittlungsstelle, zusätzlich umfasst:
das Senden einer Konvertierungsanforderungsnachricht durch die Basisstations-Steuereinrichtung an die Mobilfunknetzvermittlungsstelle, wobei die Konvertierungsanforderungsnachricht dazu eingerichtet ist, den Abbau einer Verbindung der Lokalvermittlung anzufordern.

5. Das Verfahren nach Anspruch 4, **dadurch gekennzeichnet, dass** der Schritt des Sendens der Konvertierungsbenachrichtigung an die Mobilfunknetzvermittlungsstelle durch die Basisstations-Steuereinrichtung umfasst:
das Senden einer Konvertierungsanforderungsnachricht durch die Basisstations-Steuereinrichtung an die Mobilfunknetzvermittlungsstelle, wobei die Konvertierungsanforderungsnachricht die Informationen zu den Kanälen der Schnittstelle A, die von der Basisstations-Steuereinrichtung den beiden Anrufteilnehmern zugeteilt werden, enthält.

6. Das Verfahren nach einem der vorhergehenden Ansprüche 1 bis 5, **dadurch gekennzeichnet, dass** das Verfahren nach dem Einrichten der Kanäle der Schnittstelle A durch die Basisstations-Steuereinrichtung zusätzlich umfasst:
das Abbauen einer Verbindung zur Benutzerebene der Lokalvermittlung durch die Basisstations-Steuereinrichtung.

7. Das Verfahren nach einem der vorhergehenden Ansprüche 2 bis 5, **dadurch gekennzeichnet, dass** die in der Konvertierungsbenachrichtigung enthaltene Informationen zu den Kanälen der Schnittstelle A umfasst:
Bezeichnungen eines ersten Anrufteilnehmers und eines zweiten Anrufteilnehmers der beiden Anrufteilnehmer, Informationen zu dem ersten Teilnehmer zugeteilten Kanal der Schnittstelle A, und Informationen zu dem zweiten Teilnehmer zugeteilten Kanal der Schnittstelle A;
oder
Informationen zu einem Teilnehmer zugeteilten Kanal der Schnittstelle A, und Informationen zu einem anderen Teilnehmer zugeteilten Kanal der Schnittstelle A.

8. Eine Basisstations-Steuereinrichtung, **dadurch gekennzeichnet, dass** die Basisstations-Steuereinrichtung umfasst:
ein Empfangsmodul, das ausgebildet ist, um eine von einer Mobilfunknetzvermittlungsstelle gesendeten Konvertierungsbenachrichtigung zu empfangen, wobei die Konvertierungsbenachrichtigung dazu eingerichtet ist, die Basisstations-Steuereinrichtung anzuweisen, Kanäle der Schnittstelle A für beide Anrufteilnehmer einer Lokalvermittlung einzurichten;
ein Einrichtungsmodul, das ausgebildet ist, um gemäß der vom Empfangsmodul empfangenen Konvertierungsbenachrichtigung Kanäle der Schnittstelle A für beide Anrufteilnehmer einer Lokalvermittlung einzurichten; und
ein Abbaumodul, das ausgebildet ist, um eine Verbindung zur Benutzerebene der Lokalvermittlung abzubauen, nachdem das Einrichtungsmodul die Kanäle der Schnittstelle A für beide Anrufteilnehmer einer Lokalvermittlung eingerichtet hat.

9. Eine Basisstations-Steuereinrichtung nach Anspruch 8, **dadurch gekennzeichnet, dass** die Basisstations-Steuereinrichtung zusätzlich umfasst:
ein Anforderungsmodul, das eingerichtet ist, um eine Konvertierungsanforderungsnachricht an die Mobilfunknetzvermittlungsstelle zu senden, wobei die Konvertierungsanforderungsnachricht eingerichtet ist, um den Abbau einer Verbindung der Lokalvermittlung anzufordern.

10. Eine Basisstations-Steuereinrichtung nach Anspruch 9, **dadurch gekennzeichnet, dass** die Basisstations-Steuereinrichtung zusätzlich umfasst:
Ein Zuteilermodul, das dazu eingerichtet ist, die Kanäle der Schnittstelle A für beide Anrufteilnehmer einer Lokalvermittlung zuzuteilen, wobei die Konvertierungsanforderungsnachricht die Informationen zu den Kanälen der Schnittstelle A enthält.

11. Eine Mobilfunknetzvermittlungsstelle, **dadurch gekennzeichnet, dass** die Mobilfunknetzvermittlungsstelle umfasst:
ein Zuteilermodul, das dazu eingerichtet ist, Kanäle der Schnittstelle A für beide Anrufteilnehmer einer Lokalvermittlung zuzuteilen; und
ein Sendemodul, das dazu eingerichtet ist, eine Konvertierungsbenachrichtigung an eine Basisstations-Steuereinrichtung zu senden, wobei die Konvertierungsbenachrichtigung die Informationen zu den Kanälen der Schnittstelle A enthält.

12. Eine Mobilfunknetzvermittlungsstelle nach Anspruch 11, **dadurch gekennzeichnet, dass** die Mobilfunknetzvermittlungsstelle zusätzlich umfasst:
ein Empfängermodul, das dazu eingerichtet ist, eine von einer Basisstations-Steuereinrichtung gesendeten Konvertierungsanforderungsnachricht zu empfangen, wobei die Konvertierungsanforderungsnachricht dazu eingerichtet ist, den Abbau einer Verbindung der Lokalvermittlung anzufordern.

13. Eine Mobilfunknetzvermittlungsstelle nach Anspruch 12, **dadurch gekennzeichnet, dass** das Empfängermodul zusätzlich dazu eingerichtet ist, eine von der Basisstations-Steuereinrichtung gesendeten Konvertierungsfertigstellungsnachricht zu empfangen, nachdem eine Verbindung zur Benutzerebene der Lokalvermittlung abgebaut wurde.

## Revendications

1. Procédé de conversion d'un mode d'appel, **caractérisé en ce que** ledit procédé comprend :
l'établissement, par un centre de commutation mobile, de circuits de port A pour les deux parties d'un appel d'un commutateur local et l'envoi d'un message de notification de conversion ; et
l'établissement, par un contrôleur de station de base, de circuits de port A pour les deux parties d'un appel du commutateur local selon le message de notification de conversion reçu par le contrôleur de station de base en provenance du centre de commutation mobile.

2. Procédé selon la revendication 1, **caractérisé en ce que**, avant que le centre de commutation mobile envoie le message de notification de conversion, ledit procédé comprend :
la pré-attribution, par le centre de commutation mobile, des circuits de port A pour les deux parties de l'appel, le message de notification de conversion transportant les informations des circuits de port A, et le contrôleur de station de base établissant les circuits de port A selon les informations.

3. Procédé selon la revendication 2, **caractérisé en ce que**, avant que le centre de commutation mobile envoie le message de notification de conversion, ledit procédé comprend en outre :
l'envoi, par le contrôleur de station de base, d'un message de demande de conversion au centre de commutation mobile, dans lequel le message de demande de conversion est configuré pour demander de supprimer une connexion du commutateur local.

4. Procédé selon la revendication 1, **caractérisé en ce que**, avant que le centre de commutation mobile envoie le message de notification de conversion, ledit procédé comprend en outre :
l'envoi, par le contrôleur de station de base, d'un message de demande de conversion au centre de commutation mobile, dans lequel le message de demande de conversion est configuré pour demander de supprimer une connexion du commutateur local.

5. Procédé selon la revendication 4, **caractérisé en ce que** l'étape d'envoi par le contrôleur de station de base du message de demande de conversion au centre de commutation mobile inclut : l'envoi, par le contrôleur de station de base, du message de demande de conversion au centre de commutation mobile, dans lequel le message de demande de conversion transporte les informations des circuits de port A attribués aux deux parties de l'appel par le contrôleur de station de base.

6. Procédé selon l'une quelconque des revendications 1 à 5, **caractérisé en ce que**, après que le contrôleur de station de base établit les circuits de port A pour les deux parties de l'appel du commutateur local, ledit procédé comprend en outre :
la suppression, par le contrôleur de station de base, d'une liaison de plan d'utilisateur du commutateur local.

7. Procédé selon l'une quelconque des revendications 2 à 5, **caractérisé en ce que** les informations des circuits de port A transportées dans le message de notification de conversion inclurent :
des identifiants d'une première partie appelante et d'une seconde partie appelante dans les deux parties de l'appel, des informations d'un circuit de port A attribué à la première partie appelante, et des informations d'un circuit de port A attribué à la seconde partie appelante ; ou
des informations d'un circuit de port A attribué à une partie appelante et des informations d'un circuit de port A attribué à une autre partie appelante.

8. Contrôleur de station de base, **caractérisé en ce que** ledit contrôleur de station de base comprend :
un module de réception, configuré pour recevoir un message de notification de conversion envoyé par un centre de commutation mobile, dans lequel ledit message de notification de conversion est configuré pour indiquer au contrôleur de station de base d'établir des circuits de port A de deux parties d'un appel d'un commutateur local ;
un module d'établissement, configuré pour établir les circuits de port A pour les deux parties de l'appel du commutateur local selon le message de notification de conversion reçu par le module de réception ; et
un module de suppression, configuré pour supprimer une liaison de plan d'utilisateur du commutateur local après que le module d'établissement établit les circuits de port A pour les deux parties de l'appel du commutateur local.

9. Contrôleur de station de base selon la revendication 8, **caractérisé en ce que** le contrôleur de station de base comprend en outre :
un module de demande, configuré pour envoyer un message de demande de conversion au centre de commutation mobile, dans lequel le message de demande de conversion est configuré pour demander de supprimer une connexion du commutateur local.

10. Contrôleur de station de base selon la revendication 9, **caractérisé en ce que** le contrôleur de station de base comprend en outre :
un module d'attribution, configuré pour attribuer les circuits de port A aux deux parties de l'appel du commutateur local, dans lequel les informations des circuits de port A sont transportées dans le message de demande de conversion envoyé par le module de demande.

11. Centre de commutation mobile, **caractérisé en ce que** le centre de commutation mobile comprend :
un module d'attribution, configuré pour attribuer des circuits de port A aux deux parties d'un appel d'un commutateur local ; et
un module d'envoi, configuré pour envoyer un message de notification de conversion à un contrôleur de station de base, dans lequel le message de notification de conversion transporte les informations des circuits de port A.

12. Centre de commutation mobile selon la revendication 11, **caractérisé en ce que** le centre de commutation mobile comprend en outre :
un module de réception, configuré pour recevoir un message de demande de conversion envoyé par le contrôleur de station de base, dans lequel le message de demande de conversion est configuré pour demander de supprimer une connexion du commutateur local.

13. Centre de commutation mobile selon la revendication 12, **caractérisé en ce que** le module de réception est en outre configuré pour recevoir un message d'accomplissement de conversion envoyé par le contrôleur de station de base après qu'une liaison de plan d'utilisateur du commutateur local est supprimée.
